(19) **Europäisches Patentamt / European Patent Office / Office européen des brevets**

(11) **EP 1 571 531 B1**

(12) **FASCICULE DE BREVET EUROPEEN**

(45) Date de publication et mention
de la délivrance du brevet:
**10.10.2007 Bulletin 2007/41**

(51) Int Cl.:
***G06F 1/12*** *(2006.01)*

(21) Numéro de dépôt: **05101592.3**

(22) Date de dépôt: **02.03.2005**

(54) **Procédé et dispositif d'échantillonnage de données numériques dans une transmission synchrone, avec maintien de l'intégrité binaire.**

Verfahren und Anordnung zum Abtasten von numerischen Daten in einer synchronen Übertragung mit Bewahren der binären Integrität

Method and apparatus for sampling digital data in a synchronous transmission, keeping binary integrity

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.03.2004 FR 0402351**

(43) Date de publication de la demande:
**07.09.2005 Bulletin 2005/36**

(73) Titulaire: **Thales**
**92200 Neuilly Sur Seine (FR)**

(72) Inventeurs:
• **Courant, Pierre**
**THALES Intellectual Property**
**94117, ARCUEIL (FR)**

• **Marron, Christophe**
**THALES Intellectual Property**
**94117, ARCUEIL (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
| | |
|---|---|
| **EP-A- 0 929 168** | **EP-A- 1 075 107** |
| **EP-A- 1 185 013** | **US-A- 4 972 442** |
| **US-A1- 2001 002 195** | **US-A1- 2002 135 511** |
| **US-B1- 6 473 439** | |

**Description**

La disparition momentanée de l'horloge accompagnant les données représente un problème important dans le cas d'une transmission synchrone de données numériques.

Ce phénomène de perte d'horloge apparaît notamment lorsque la liaison est réalisée par voie hertzienne dans un environnement électromagnétique perturbé par d'autres émissions. Il peut apparaître également pour d'autres types de liaisons, par exemple filaires, en particulier comme conséquence de phénomènes de couplage de lignes.

Dans le cas d'une transmission synchrone, la perte du signal d'horloge conduit généralement à la perte des données associées, ainsi qu'à la mise en oeuvre d'une procédure de re-synchronisation générale des équipements qui est souvent longues. Des procédures de re-synchronisation générale trop fréquentes ont pour conséquence de diminuer considérablement le débit de transmission des informations. L'invention décrite et revendiquée dans le présent document traite de la façon de résoudre le problème posé par la disparition momentanée de l'horloge accompagnant les données dans une transmission synchrone. Elle a pour but de supprimer, ou du moins d'espacer le plus possible les opérations de re-synchronisation générale.

Dans le cadre d'une transmission de données synchrone - dans la suite du texte on parlera pour simplifier de transmission synchrone - l'équipement émetteur transmet simultanément les données utiles et une horloge de séquencement permettant à l'équipement récepteur d'échantillonner et de traiter les données de façon satisfaisante. Cependant dans certaines circonstances l'horloge de séquencement peut être très perturbée. Elle peut également disparaître complètement. Dans ces circonstances, l'équipement récepteur utilise généralement une horloge de substitution fabriquée localement. Pour que la liaison puisse se maintenir, l'horloge de substitution doit être la plus proche possible de l'horloge de séquencement qui fait défaut. De la sorte et si la perte d'horloge est brève, il n'apparaît pas de perte de bits d'information. Lors de la réapparition de l'horloge de séquencement fournie par l'équipement émetteur, l'équipement récepteur utilise à nouveau l'horloge de séquencement. L'horloge de substitution est en générale synthétisée par l'élément récepteur de l'équipement de réception qui est l'élément amont de la chaîne de réception. La substitution d'horloge se fait souvent de manière automatique sans que les éléments situés en aval soient informés.

Dans les cas les plus favorables de réalisation, l'horloge de substitution est une horloge de même fréquence et de même stabilité que l'horloge de séquencement provenant de l'équipement émetteur. L'horloge de substitution peut en outre, lors d'une initialisation préalable, avoir été synchronisée avec l'horloge de séquencement, par exemple à l'occasion de l'établissement de la liaison ou encore lors d'une opération de re-synchronisation générale. Néanmoins, même dans un tel cas, il apparaît au fil du temps une dérive entre l'horloge transmise et l'horloge locale. En cas de perte de l'horloge de séquencement, cette désynchronisation rend inefficace l'échantillonnage des données par l'horloge locale et conduit rapidement à la perte de bits de données.

La perte de bits de données détruit l'intégrité des données transmises occasionnant généralement la perte de trames complètes, voire de la totalité du message transmis. Elle conduit nécessairement à la mise en oeuvre d'une procédure de re-synchronisation dès que l'horloge transmise est de nouveau détectée par l'équipement récepteur.

Le phénomène est bien entendu aggravé et la perte d'intégrité encore plus rapide si l'horloge locale est d'une précision moindre.

Une solution pour résoudre ce problème de désynchronisation consiste à implanter une horloge de référence dans l'équipement émetteur et dans l'équipement récepteur et à effectuer une synchronisation régulière des horloges de référence. Cette solution est cependant difficile à mettre en pratique. Elle nécessite par exemple l'emploi d'équipements resynchronisables à distance et s'avère coûteuse en temps et peu discrète.

Le document EP-A-1 075 107 divulgue une interface adaptée à un échange de données synchrone, utilisant une base de temps local commune pour l'émission et pour la réception de données. Selon ce document, cette horloge de base est utilisée pour synthétiser l'horloge d'échantillonnage servant à échantillonner les données reçues sur la voie de réception. L'horloge locale CK de période T est utilisée pour générer N horloges $CK_n$ de même fréquence que l'horloge locale CK, chaque horloge $CK_n$ étant retardée de $nT/N$ par rapport à l'horloge CK. Par suite, l'horloge d'échantillonnage des données reçues en entrée est obtenue en sélectionnant l'horloge CK la plus appropriée pour échantillonner les données reçues. Cette sélection est réalisée en mesurant en permanence le déphasage relatif existant entre le signal reçu et l'horloge d'échantillonnage courante et en sélectionnant parmi les N horloges $CK_n$, en fonction de la mesure effectuée sur les données, celle qui se trouve être synchrone aux données reçues ou à défaut celle qui présente le déphasage le plus faible.

Pour résoudre de ce problème de désynchronisation lié à la perte accidentelle de l'horloge de séquencement des données, le procédé selon l'invention consiste en un procédé permettant la substitution de l'horloge de séquencement reçue, par une horloge locale fabriquée en interne et recalée de manière périodique sur l'horloge de séquencement tel que défini dans la revendication independante 1. L'invention porte également sur un dispositif mettant en oeuvre ce procédé, dispositif défini dans la revendication 6.

Le procédé selon l'invention présente l'avantage de permettre de s'affranchir la plupart du temps de l'horloge transmise et de rendre ainsi la liaison moins sensible à d'éventuelles dérives indétectables de fréquence ou à des pertes de transmission fugitives de l'horloge de séquencement des données dans la liaison. De plus, grâce au procédé selon l'invention, en cas de perte totale de l'horloge transmise pendant un temps supérieur à la période de recalage de l'horloge locale, le maintien de l'intégrité de la transmission ou intégrité binaire est avantageusement assuré pendant un laps de temps maximum, seulement déterminé par la précision des horloges. En outre, en cas d'arrêt de la transmission, le procédé selon l'invention présente l'avantage de faciliter la re-synchronisation de l'horloge locale sur l'horloge transmise à la reprise de la transmission.

D'autres modes de réalisation de l'invention sont spécifiés dans les revendications dépendantes attenantes.

D'autres caractéristiques et avantages pourront apparaître au travers de la description qui suit; description faite en regard des figures annexées qui représentent :

- la figure 1, le synoptique simplifié d'une chaîne de transmission de données synchronisée,
- la figure 2, un chronogramme illustrant la notion de perte d'intégrité binaire,
- la figure 3, un chronogramme illustrant le principe du recalage d'horloge,
- la figure 4, un chronogramme illustrant le procédé selon l'invention,
- la figure 5, un mode de réalisation préféré du dispositif mettant en oeuvre le procédé selon l'invention.

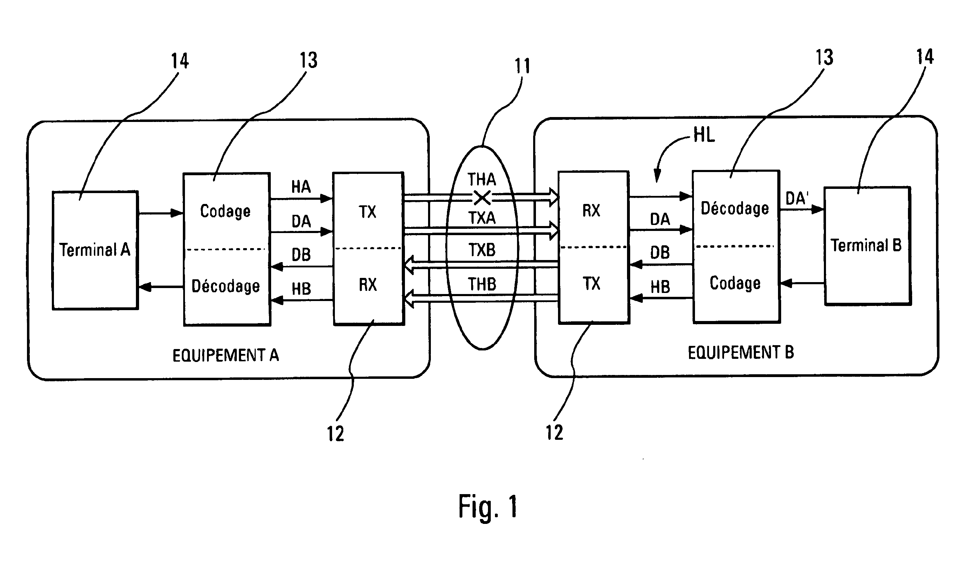

La chaîne de transmission illustrée par le synoptique de la figure 1, est présentée à titre d'exemple. Elle permet de mettre en évidence le problème posé par une réception perturbée de l'horloge de séquencement accompagnant les données dans le cas d'une transmission de données numériques synchrone. De manière générale une chaîne de transmission entre deux équipements A et B met en jeu les deux équipements A et B, ainsi que le canal 11 de propagation des données entre A et B.

Ce canal peut consister par exemple en une liaison électrique filaire bidirectionnelle, ou encore en une liaison radio-électrique. Chacun des équipements A ou B comporte plusieurs sous-ensembles: un sous-ensemble 12 assurant l'adaptation des données au canal de transmission, un sous-ensemble 13 assurant le conditionnement des données et un sous-ensemble 14 assurant le traitement et l'exploitation des données transmises.

Le sous-ensemble 12 assure l'adaptation des données au type de canal. Dans le cas d'une transmission radio-électrique, ce sous-ensemble peut par exemple comporter un étage de modulation-démodulation, et un étage émetteur-récepteur. Dans le cas d'une liaison filaire ce sous-ensemble peut consister en un équipement de type Modem.

Le sous-ensemble 13 ou sous-ensemble de Codage-Décodage, assure le conditionnement et le déconditionnement des données. Le conditionnement des données consiste généralement en une opération de codage ou de calcul de signature qui a pour but de permettre le contrôle de l'absence d'altération des données transmises. Dans le cas d'une transmission de données groupées sous-forme de trames ou de messages et comportant une en-tête, ce sous-ensemble peut avoir également pour rôle d'effectuer une séparation des groupes de données à la réception. Pour ce faire, il doit être en mesure d'échantillonner correctement les données et d'identifier un groupe de données formant un tout. De même dans le cas de transmissions de données numériques compressées ou concaténées, le sous-ensemble peut avoir par exemple pour rôle de décompresser ou de séparer les donnée à la réception. Les données ainsi déconditionnées sont transmises au terminal qui en assure le traitement et l'exploitation.

Dans le cas d'une transmission de données synchrone, le canal 11 de transmission comporte par exemple une voie TXA de transmission des données de l'équipement A vers l'équipement B accompagnée d'une voie THA de transmission de l'horloge de séquencement associée. De manière symétrique, le canal comporte également une voie de transmission TXB des données de l'équipement B vers l'équipement A accompagnée d'une voie THB de transmission de l'horloge associée.

Dans une phase de fonctionnement normal, les données émises par l'équipement A sont reçues par l'équipement B et échantillonnées au moyen d'une horloge directement issue de l'horloge $H_A$ accompagnant les données. En cas de rupture ou de dégradation de la voie THA, une tentative de maintien du fonctionnement de la transmission est réalisée par substitution d'une horloge locale HL à l'horloge HA déficiente. Cette horloge locale est de même fréquence nominale que l'horloge normalement transmise. Elle est par exemple fournie par le sous-ensemble, émetteur-récepteur ou Modem selon les cas, qui assure l'adaptation des données au canal de transmission. C'est l'équipement situé le plus en amont de la chaîne de réception.

L'horloge locale HL est transmise automatiquement, en remplacement de l'horloge HA déficiente, au sous-ensemble de décodage qui l'utilise pour effectuer la mise en forme des données reçues.

Cette substitution d'horloge a pour conséquence de conduire à une désynchronisation entre les données reçus et l'horloge utilisée pour échantillonner ces données. La désynchronisation se traduit concrètement par la perte de bits de données qui peut par exemple entraîner une erreur dans le décodage des données. Une erreur de décodage conduit généralement à la perte de toutes les trames qui suivent. La transmission désynchronisée est alors interrompue et une procédure de resynchronisation doit être mise en oeuvre.

Il est à noter qu'en cas de perte de l'horloge HA accompagnant les données, les effets de la désynchronisation entre l'horloge locale et les données transmises se font sentir d'autant plus rapidement que l'horloge locale et l'horloge transmise ont des précisions et des stabilités en fréquence différentes.

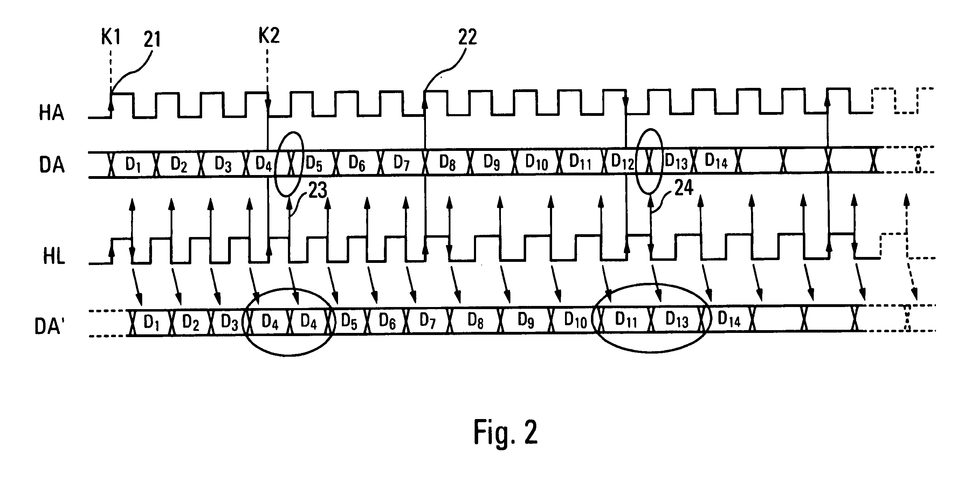

La figure 2 illustre par un chronogramme les effets induits par la substitution d'une horloge locale HL à l'horloge HA accompagnant des données DA, lors de l'opération d'échantillonnage des données Da. Les deux horloges Dans l'exemple de la figure, qui correspond à la pratique, les horloges HA et HL ont la même fréquence nominale $F_0$. En revanche les deux horloges présentent des précisions et des stabilités différentes. La différence de précision se traduit par une différence de fréquence, alors que la différence de stabilité se traduit, si l'on prend HA comme référence, par une variation relative de la fréquence de HL par rapport à la fréquence de HA au cours du temps. Tout ceci se traduit finalement par un glissement de la position des fronts de l'horloge HL par rapport à la position des fronts de HA et par une variation de l'instant d'échantillonnage des données par rapport à l'instant d'apparition. Dans l'exemple de la figure 2, les instants d'apparition des données sont donnés par les fronts montants de l'horloge HA. L'échantillonnage des données est quant à lui réalisé à des instants correspondant aux fronts descendants de l'horloge HL. Par ailleurs l'exemple de la figure 2 illustre une situation où l'horloge HL est moins stable que l'horloge HA, la fréquence de HL étant plus élevée que celle de HA entre les instants 21 et 22, tandis qu'elle est plus faible après l'instant 22.

Dans une situation normale de fonctionnement pour laquelle l'échantillonnage des données est réalisé à l'aide de l'horloge HA, un échantillonnage des données réalisé aux instants d'apparition des fronts descendants de HA permet de réaliser un échantillonnage systématiquement correct des données. En effet l'échantillonnage étant réalisé à des instants éloignés des phases d'établissement de la donnée, la donnée échantillonnée a alors une valeur stable.

En revanche, en cas de perturbations, la position dans le temps de l'instant d'échantillonnage par rapport à l'instant d'établissement de la donnée, devient fluctuant. Il arrive alors des cas où l'échantillonnage se produit à un instant où une donnée est en cours d'établissement. Le résultat de l'échantillonnage est alors incertain et peut conduire à une donnée DA' erronée. Dans l'exemple de la figure 2, de tels incidents surviennent aux instants 23 et 24. Dans le premier cas, l'horloge HL ayant une fréquence supérieure à l'horloge HA, le glissement relatif des fronts des horloges conduit au double échantillonnage de la donnée $D_4$. Dans le deuxième cas, l'horloge HL a une fréquence inférieure à celle de l'horloge HA et le glissement des fronts conduit à l'absence d'échantillonnage de la donnée $D_{12}$ On obtient dans les deux cas une donnée DA' erronée.

L'illustration de la figure 2 permet de constater, comme il a été dit précédemment, que plus la précision et la stabilité des horloges HL et HA sont grandes, plus tard se produiront les conséquences du glissement relatif des fronts d'horloges.

Ainsi à titre d'exemple on peut considérer deux horloges HL et HA de fréquence $F_0$, les horloges ayant des précisions identiques égales à $\pm 10^7$. L'écart de fréquence entre les deux horloges est égal $2 10^{-7} * F_0$. A partir de l'instant $t_1$ où les fronts montants des deux horloges sont synchrones, il se produit au fil du temps un décalage des fronts montants dont la valeur croit d'une valeur sensiblement égale $2*10^{-7}*T_0$ à chaque période d'horloge HA, $T_0$ étant égal à $1/F_0$. De sorte qu'au bout d'un temps $T_m$ correspondant sensiblement à $5*10^6$ périodes d'horloge on obtient un décalage d'une valeur maximum égale à $T_0$. Ce décalage se traduit nécessairement par un échantillonnage erroné des données reçues. De la même façon si les horloges HL et HA ont une précision seulement égale à $\pm 5*10^{-5}$, le temps $T_m$ correspondra à $10^4$ périodes de l'horloge HA.

Dans l'exemple illustré par la figure 2, les données cadencées par l'horloge HA sont échantillonnées sur le front descendant de HL. Dans une telle configuration qui représente une configuration courante, on constate que, les horloge étant synchrones à l'instant $t_1$, la perte d'intégrité binaire qui correspond à l'échantillonnage d'une valeur erronée apparaît au bout d'un temps $t_2$ correspondant à un décalage entre fronts montants égal à une demi période de l'horloge HA. Dans cette configuration de fonctionnement, en reprenant les valeurs et le raisonnement de l'exemple précédent, on peut constater que les horloges HL et HA ayant une précision de $\pm 10^{-7}$, l'intégrité binaire sera perdue au bout d'un temps égal à $2.5*10^6$ périodes de l'horloge HA, c'est à dire après échantillonnage de $2.5*10^6$ données binaires correspondant par exemple à 312500 octets d'information. En revanche, si HA et HL ont une précision de seulement $\pm 5*10^{-5}$, l'intégrité binaire sera perdue beaucoup plus rapidement. L'intégrité binaire sera alors perdue après échantillonnage de $5*10^3$ données binaires, correspondant par exemple à 625 octets.

L'illustration de la figure 2 permet donc de bien discerner le problème qui se pose lorsque, à la suite d'une perte du signal d'horloge HA, on est contraint d'échantillonner les données reçues avec une horloge locale. On constate également au travers des exemples numériques que même si HL et HA présentent un écart de fréquence faible, la perte d'intégrité binaire à plus ou moins longue échéance est inévitable. Cette perte d'intégrité conduit à l'arrêt de la transmission et à la mise en oeuvre d'une opération de resynchronisation coûteuse en temps.

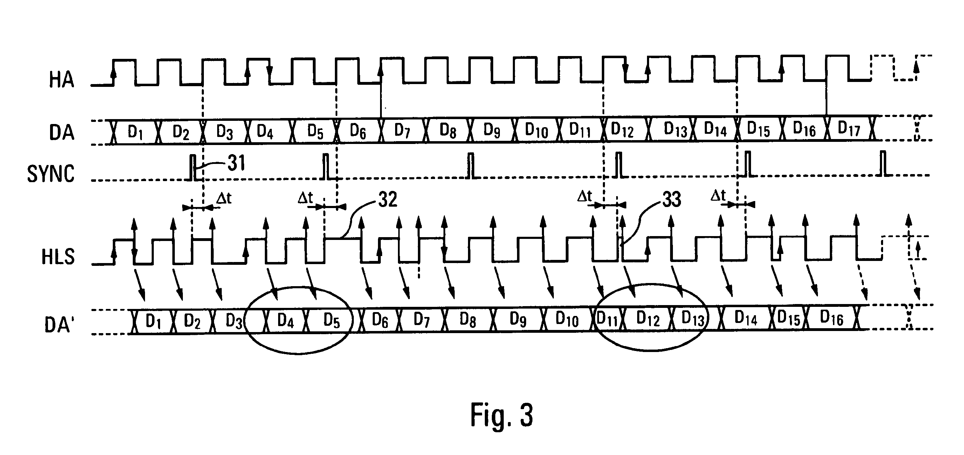

La figure 3 représente un deuxième chronogramme permettant d'illustre sur un exemple le principe du procédé selon l'invention qui permet de conserver le plus longtemps possible l'intégrité binaire dans le cas où la transmission de l'horloge HA est perturbée. Le procédé selon l'invention est basé sur l'utilisation permanente d'une horloge locale HLS, synchronisée périodiquement avec l'horloge HA accompagnant les données. Pour ce faire le décalage temporel entre les fronts montants des horloges HA et HLS est par exemple mesuré en permanence, tandis que périodiquement, en des instants matérialisés, par les impulsions 31 constituant le signal périodique SYNC, le procédé selon l'invention procède à la re-synchronisation de HLS sur HA. La synchronisation se traduit par un allongement ou par une diminution sur une période de la durée de l'impulsion d'horloge HLS, de façon à ce que les horloges HA et HLS redeviennent synchrones.

La figure 3 reprend à titre d'exemple la configuration initiale présentée par la figure 2. On y voit apparaître l'horloge HA accompagnant normalement les donnés transmises, ainsi que l'horloge locale HLS destinée à échantillonner les données. Cependant, à la différence de l'exemple de la figure 2, l'horloge locale HLS n'est plus totalement indépendante de l'horloge HA. Elle est périodiquement re-synchronisée, l'opération de re-synchronisation étant effectuée au rythme du signal SYNC.

Selon que le front montant de l'horloge HLS est en avance ou en retard sur le front montant correspondant de l'horloge HA, l'opération de re - synchronisation réalise un ajustement de HLS donnant lieu à la création d'une impulsion 32 dont la durée est allongée, ou d'une impulsion 33 dont la durée est raccourcie.

La figure 3 permet de constater que, à la condition qu'elle soit effectuée au bon moment, la re-synchronisation a pour conséquence d'empêcher l'apparition de données erronées. Une condition pour qu'il n'apparaisse pas de données erronées, est que la correction de l'écart de temps séparant les fronts montants des horloges HLS et HA, soit réalisée de façon suffisamment fréquente pour que l'écart mesuré ne soit pas supérieur à une demi-période de l'horloge HA. De cette façon, comme cela a été montré précédemment, l'intégrité binaire est indéfiniment conservée.

Au travers de l'illustration de la figure 3, on constate également que la resynchronisation périodique de l'horloge HLS se traduit par une variation fugitive périodique de la durée de l'impulsion d'horloge HLS, encore appelée Jitter selon la dénomination anglo-saxonne. Ce dernier effet est d'autant moins perceptible que l'opération de re-synchronisation est réalisée moins fréquemment.

Les deux constatations précédentes permettent donc de conclure que la mise en oeuvre du procédé selon l'invention repose sur l'utilisation d'un signal de synchronisation, synchrone de l'horloge HLS par exemple, dont la période est suffisamment grande pour limiter l'effet de jitter et suffisamment faible pour assurer la conservation de l'intégrité binaire du signal.

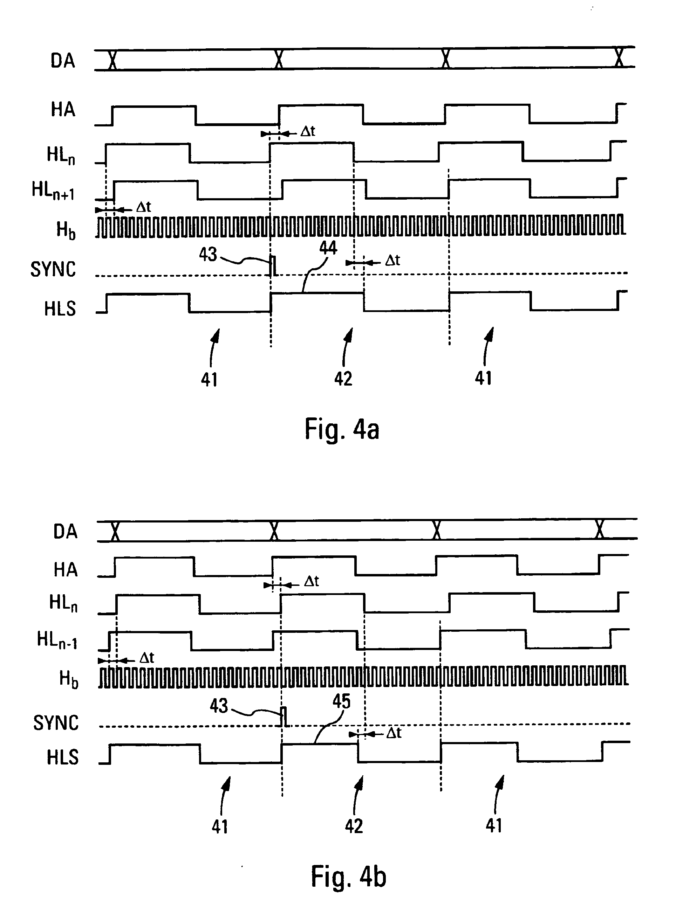

La figure 4 illustre une façon possible de mettre en oeuvre le procédé selon l'invention et en particulier de réaliser l'horloge HLS. La figure 4 présente sur deux chronogramme distincts 4a et 4b la mise en oeuvre du procédé selon l'invention selon que la fréquence de l'horloge HLS est plus élevée (chronogramme 4a) ou plus faible (chronogramme 4b) que celle de l'horloge HA qui accompagne les données.

Le procédé selon l'invention consiste en pratique à construire une horloge locale HLS à partir d'un ensemble de N horloges $HL_i$. Les horloges $HL_i$ ont une même fréquence $F_l$ égale à la fréquence $F_b$ d'une horloge de base $H_b$ divisée par N. Ainsi on peut écrire :

$$F_l = F_b/N.$$

Les horloges $HL_i$ présentent la particularité d'être décalées les unes des autres d'une durée $T_b$ égale à la période de l'horloge de base.

Le procédé selon l'invention repose en outre, connaissant les précisions des horloges HA et HLS, sur la détermination de l'intervalle de temps minimum $\Delta T$ au bout duquel l'écart temporel $\delta t$ entre les fronts montants des horloges HLS et HA devient supérieur à $T_b$, et à effectuer des opérations de resynchronisation avec une périodicité la plus proche possible par valeur inférieure de $\Delta T$.

Ainsi, connaissant $\Delta T$, le procédé selon l'invention peut être décrit comme un procédé de génération du signal HLS alternant deux phases de fonctionnement:

une phase stabilisée 41 qui s'étend entre deux opération de resynchronisation, durant laquelle on fait correspondre l'horloge HLS avec une horloge $HL_n$ sélectionnée parmi le N horloges $HL_i$;
une phase 42 dont le début est matérialisé par l'impulsion 43, durant laquelle on mesure de l'écart entre les fronts montants de HLS et HA et on modifie HLS de façon à la faire correspondre à l'horloge $HL_{n-1}$ ou à l'horloge $HL_{n+1}$, selon que HLS est en avance ou en retard par rapport à HA.

L'alternance de ces deux phases de fonctionnement permet de garantir que l'écart temporel entre les fronts montants ne peut excéder un Nième de la période de HLS. Cette condition est suffisante pour que l'intégrité binaire de la liaison entre équipements soit assurée.

Le chronogramme 4a illustre le cas où la fréquence de HLS supérieure à la fréquence de HA. Dans ce cas on constate que durant la phase 42 de modification de HLS, la période de l'horloge HLS subit un allongement égal à l'écart $T_b$, qui se traduit par un allongement de la durée de l'état haut 44.

Le chronogramme 4b illustre quant à lui le cas opposé où la fréquence de HLS est inférieure à la fréquence de HA. Dans ce cas on constate que durant la phase 42 de modification de HLS, la période de l'horloge HLS subit un rétrécissement égal à l'écart $T_b$, qui se traduit par un raccourcissement de la durée de l'état haut 45.

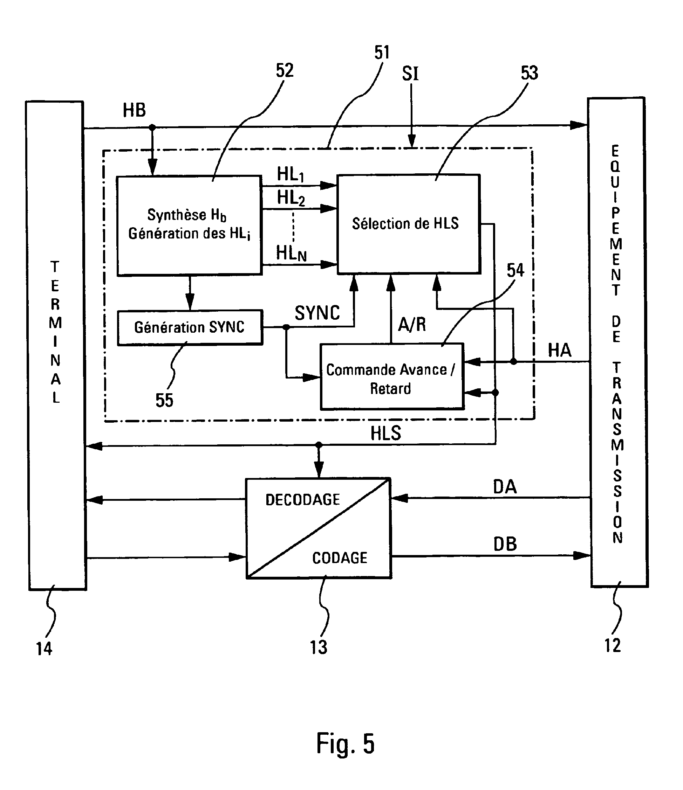

La figure 5 présente le schéma synoptique d'un dispositif permettant de mettre en oeuvre le procédé selon l'invention. Sur L'illustration de la figure 5 le dispositif est présenté dans une forme de réalisation préférée comme un élément intégré à l'équipement B de la figure 1. Dans la pratique, le dispositif est destiné à être intégré à tous les équipements en liaison.

Le dispositif 51 selon l'invention comporte quatre modules permettant de réaliser les quatre fonctions qui permettent la mise en oeuvre du procédé selon l'invention:

- le module 52 qui effectue la génération des N horloges $HL_i$,
- le module 53 qui réalise la sélection de l'horloge $HL_n$ correspondant à HLS entre deux re-synchronisations,
- le module 54 qui effectue la mesure du décalage des fronts montants de HA et de HLS et la génération de la commande binaire A/R permettant de sélectionner $HL_{n-1}$ ou $HL_{n+1}$ pour l'opération de resynchronisation.
- le module 55 de génération du signal de synchronisation qui définit la durée de la période s'étendant entre deux re-synchronisations successives.

Le module 52 a pour fonction principale de réaliser l'horloge de base $H_b$ à partir d'une horloge interne de référence de l'équipement B une horloge dont la fréquence est sensiblement égale à N fois la fréquence de l'horloge HLS. L'horloge $H_b$ peut par exemple être synthétisée à l'aide d'un dispositif comportant une boucle à verrouillage de phase à partir de l'horloge de référence. Cette horloge de référence peut être, comme sur la figure, l'horloge HB qui accompagne les données DB émises par l'équipement B.

L'horloge de base $H_b$ est ensuite re-divisée par N pour produire N horloges $HL_i$ successives, chacune étant décalée dans le temps de la durée d'une période de $H_b$ par rapport à l'horloge de rang inférieur et à celle de rang supérieur. Le module 52 délivre ainsi N horloges au module de sélection 53, le front montant de l'horloge $HL_n$ se trouvant donc, comme l'illustre la figure 4, en avance ou en retard d'une période de Hb sur les fronts montants de $HL_{n-1}$ et $HL_{n+1}$.

Le module 53 réalise la synthèse proprement dite de l'horloge HLS à partir des n Horloges $HL_i$ fournies par le module 52 selon le mécanisme suivant.

Entre deux phases de synchronisation 42 l'horloge HLS synthétisée est la recopie de l'horloge $HL_n$ qui est l'horloge sélectionnée lors de la dernière opération de resynchronisation. Puis, durant la phase de synchronisation suivante, sous l'impulsion de la commande binaire A/R, le module 53 substitue à l'horloge $HL_n$, l'horloge $HL_{n+1}$ ou l'horloge $HL_{n-1}$ qui se trouve être plus synchrone de l'horloge HA que l'horloge $HL_n$. L'horloge $HL_{n-1}$ ou $HL_{n+1}$ ainsi sélectionnée est ensuite maintenue pendant toute la phase stabilisée 41 qui suit, jusqu'à la prochaine re-synchronisation implémentée sous l'impulsion du signal SYNC.

La substitution de l'horloge $HL_{n-1}$ ou $HL_{n+1}$ à l'horloge $HL_n$ est illustrée par la figure 4. Elle est réalisée par le module 53 sans qu'il y ait apparition d'une discontinuité sur l'horloge HLS. Elle se traduit seulement par un allongement ou un raccourcissement d'une période de l'horloge HLS

Ainsi au rythme de l'apparition du signal SYNC, l'horloge HLS recopie successivement l'une ou l'autre des N horloges fournies par le module 52.

Le module 54 réalise la synthèse de la commande binaire A/R dont le rôle est d'indiquer au module 53 si l'horloge devant être sélectionnée après l'horloge $HL_n$ pour la phase stabilisée suivante, est $HL_{n-1}$ ou $HL_{n+1}$. La commande A/R peut par exemple être élaborée à partir de la mesure du décalage existant entre les fronts montants de HLS et de HA à l'apparition du signal SYNC. Ainsi si, par exemple, le premier front montant de HLS qui suit l'apparition du signal SYNC est en avance sur le premier front de HA suivant cette apparition, la commande binaire A/R prendra la valeur, 0 ou 1, qui indique au module 53 que l'horloge à sélectionner est $HL_{n-1}$. Inversement, dans le cas contraire, la commande A/R prendra la valeur, respectivement 1 ou 0, qui indique au module 53 que l'horloge à sélectionner est $HL_{n+1}$.

Le module 55 est le module responsable de la synthèse du signal SYNC qui déclenche l'opération de re-synchronisation. Le signal SYNC est par exemple constitué d'une suite périodique d'impulsions. Sa période est notamment fonction de l'intervalle de temps minimum $\Delta T$ au bout duquel, compte tenu de la précision et de la stabilité des horloges HLS et HA, l'écart temporel $\delta t$ entre les fronts montants des horloges HLS et HA initialement synchrones devient supérieur à $T_b$,

La synthèse du signal SYNC peut par exemple avantageusement être réalisée par simple comptage, à partir de l'horloge $H_b$ fournie par le module 52. Le module 55 peut alors même être intégré dans le module 52.

En rendant possible l'utilisation continue d'une horloge interne pour l'échantillonnage des données reçues, l'implantation d'un dispositif mettant en oeuvre le procédé selon l'invention dans un équipement de transmission présente l'avantage d'offrir la possibilité d'augmenter dans certaines circonstances de manière significative le temps de maintien de l'intégrité binaire de la transmission. Cet avantage est d'autant plus mesurable que les conditions de transmission sont plus mauvaises. On peut en particulier évaluer l'importance de cet avantage en considérant trois cas types: le cas d'un fonctionnement non perturbé, le cas d'un fonctionnement comportant des périodes de perturbation brèves et espacées et le cas d'un fonctionnement totalement perturbé avec disparition de l'horloge HA d'accompagnement des données.

Dans le cas d'un fonctionnement non perturbé, l'utilisation d'une horloge interne HLS périodiquement re-synchronisée permet de maintenir indéfiniment l'intégrité binaire de la liaison. Tout se passe comme si l'échantillonnage des données transmises était réalisé avec l'horloge accompagnant les données.

Dans le cas d'un fonctionnement perturbé par des disparitions brèves de l'horloge HA accompagnant les données l'utilisation de cette horloge pour échantillonner les données reçues conduit à une perte rapide de l'intégrité binaire de la liaison, l'horloge absente étant alors remplacée par une horloge locale quelconque parfois d'une précision moindre. En revanche l'utilisation d'une horloge interne HLS re-synchronisée permet de maintenir l'intégrité binaire de manière prolongée voire indéfinie pour autant que l'horloge accompagnant les données soit présente pendant la phase de resynchronisation.

Dans le cas d'un fonctionnement totalement perturbé, l'utilisation d'une horloge HLS s'avère également avantageuse. En effet, en cas de perte définitive de l'horloge HA accompagnant les données, l'horloge locale HLS maintient l'intégrité binaire pendant un temps ΔT par définition au moins égal à la période de resynchronisation. Tandis que l'utilisation directe de l'horloge HA conduit généralement à une perte rapide de l'intégrité binaire.

L'efficacité du procédé selon l'invention peut être mise en évidence sur l'exemple numérique simple développé dans la suite du document, en reprenant l'illustration de la figure 1.

On considère par exemple un équipement B recevant par voie hertzienne des données d'un équipement A sur un rythme de 2 Mbits/s, ces donnée étant échantillonnées directement au moyen de l'horloge HA. On considère de plus que les horloges de référence HA et HB ont une précision de $\pm 10^{-7}$ et que l'horloge locale HL fournie par le sous-ensemble 12 au sous-ensemble 13 en cas de perte de l'horloge HA, a une précision de $\pm 5\ 10^{-6}$. Cette hypothèse correspond dans l'exemple au fait que l'horloge de substitution est fournie par un sous-ensemble dont la fréquence de travail élevée ne possède pas une précision aussi importante que $\pm 10^{-7}$.

Dans une telle configuration, en fonctionnement normal l'intégrité binaire est naturellement conservée indéfiniment. En revanche, en cas de perte de l'horloge HA, un calcul simple non détaillé dans ce document montre que les horloges n'étant pas synchronisées, l'intégrité binaire sera dans le meilleurs des cas maintenue pendant un temps maximum $\Delta T_i$ correspondant à l'échantillonnage d'environ $10^5$ données binaires, soit pendant 50 ms, Comme cela a été dit précédemment, ce temps maximum $\Delta T_i$ est donné par le nombre de périodes de l'horloge HA au bout duquel les fronts montants initialement synchrones de HL et HA présentent pour la première fois un décalage égal ou supérieur à une demi période de HA.

Il est à noter que le cas optimum correspond à une situation où le front montant de l'horloge de substitution se trouve être par hasard synchrone de celui de HA au moment où celle-ci disparaît. Dans la plupart des cas l'intégrité binaire n'est assurée qu'un court instant.

De même, si l'horloge locale HL possède une précision égale à $\pm 10^{-7}$, l'intégrité binaire sera dans le meilleurs des cas conservée pendant un temps maximum correspondant à l'échantillonnage d'environ $2.5*10^6$ données binaires, soit pendant 1.25 s.

On considère ensuite un équipement B comportant un dispositif mettant en oeuvre le procédé selon l'invention. Cet équipement utilise une horloge locale HLS dont la précision est identique à celle de l'horloge HA, soit $10^{-7}$. En fonctionnement normal cette horloge est périodiquement recalée sur l'horloge HA et ne présente après recalage qu'un écart inférieur au Nième de la période de l'horloge de référence, par exemple HB, à partir de laquelle est construite HLS. Cet écart mineur permet de maintenir indéfiniment l'intégrité binaire comme c'est le cas pour un équipement ne comportant pas de dispositif selon l'invention. En revanche en cas de perte de l'horloge HA, du fait de la synchronisation des horloges HA et HLS, l'intégrité binaire de la liaison sera effectivement maintenue, en toute circonstance, pendant un temps sensiblement égal au temps $\Delta T_i$. On aura ainsi en toute circonstance, un maintien de l'intégrité binaire au moins sensiblement égal à $\Delta T_i$, ce qui correspond dans l'exemple au maintien de l'intégrité binaire pendant au moins 1.25 s.

## Revendications

1. Procédé d'échantillonnage, au moyen d'une horloge locale HLS, de données séquencées par une horloge HA et transmises avec l'horloge HA, d'un équipement A à un équipement B, avec maintien de l'intégrité binaire, comportant au moins deux phases répétées en alternance

   - une phase (41) de fonctionnement libre durant laquelle l'équipement B échantillonne les données au moyen de l'horloge locale HLS. cette horloge fonctionnant de manière autonome,
   - une phase (42) desynchronisation de l'horloge locale HLS sur l'horloge HA;

   durant laquelle l'horloge locale HLS, tout en échantillonant les données transmises, est synchronisée sur l'horloge HA qui séquence les données cette synchronisation étant réalisée, sans produire de discontinuité sur l'horloge locale HLS, en déterminant si le front montant de l'horloge locale HLS est en avance ou en retard sur celui de l'horloge HA et

   - en raccourcissant la durée de l'horloge locale HLS durant un cycle d'horloge si le front montant de l'horloge locale HLS est en retard sur celui de l'horloge HA.
   - en allongeant la durée de l'horloge locale HLS durant un cycle d'horloge si l'horloge locale HLS est en avance sur l'horloge HA,

   de sorte que les horloges HLS et HA soient synchrones au cycle suivant:

   la fréquence d'exécution de l'étape de synchronisation étant définie de façon à garantir que, compte tenu des précisions des horloges HA et HLS, l'écart entre les fronts montants des deux horloges ne soit pas supérieur à une demi période de l'horloge HA.

**2.** Procédé selon la revendication 1, **caractérisé en ce que**, lors de la phase de synchronisation, l'allongement ou le raccourcissement de la durée de l'horloge locale HLS est réalisé en allongeant (44) ou en raccourcissant (45) la durée de l'impulsion d'horloge.

**3.** Procédé selon l'une des revendications 1 ou 2, **caractérisé en ce que** le passage de la phase (41) de fonctionnement libre à la phase (42) de synchronisation est effectué à l'apparition d'un signal de synchronisation, SYNC, constitué d'impulsions périodiques (31, 43).

**4.** Procédé selon la revendication 3, **caractérisé en ce que** la période du signal de synchronisation (31, 43) est telle, qu'entre deux phases de re-synchronisation et ou une valeur N choisie, l'intervalle de temps entre les fronts montants des horloges HLS et HA ne devient pas supérieur à une valeur égale au Nième de la période de l'horloge HA.

**5.** Procédé selon l'une quelconque des revendications 1 à 4, **caractérisé en ce que**, durant la phase de synchronisation (42), l'avance ou le retard du front montant de l'horloge locale HLSsur le front montant de l'horloge HA, est déterminée en mesurant l'intervalle de temps δt séparant ces deux fronts montants.

**6.** Dispositif comprenant des moyens adaptés à mettre en oeuvre les étapes du procédé d'échantillonnage selon la revendication 4, **caractérisé en ce qu'**il comporte au moins:

- des moyens (52) pour synthétiser à partir d'une horloge de référence HB, N horloges HL$_i$ de fréquence égale à la fréquence de HB, de précision sensiblement égale à la précision de l'horloge de référence HB, chaque horloge de rang n présentant un front montant décalé d'un intervalle de temps Δt, respectivement en avance ou en retard par rapport aux horloges de rang n-1 ou n+1,
- des moyens (53) pour délivrer l'horloge locale HLS, cette horloge étant obtenue par sélection, à chaque étape de synchronisation, d'une horloge HL$_n$ parmi les N horloges HL$_i$ synthétisées, de sorte que l'horloge locale reste égale à l'horloge HL$_n$jusqu'à l'étape de synchronisation suivante, et qu'elle devient ensuite égale à HL$_{n+1}$ ou HL$_{n-1}$ suivant la valeur de la commande appliquée aux dits moyens.
- des moyens (54) pour synthétiser une commande Avance/Retard appliqués aux moyens (53) délivrant l'horloge d'échantillonnage HLS, la valeur de cette commande permettant de déterminer à chaque étape de synchronisation, à partir de l'horloge HL$_n$ sélectionnée à l'étape de synchronisation précédente, l'horloge HL$_{n-1}$ ou HL$_{n+1}$ destinée à constituer l'horloge locale HLS jusqu'à l'étape de synchronisation suivante;la valeur de cette commande étant fonction du résultat de l'analyse de l'écart temporelle δt existant entre le front montant de l'horloge locale HLS et celui de l'horloge HA,
- des moyens (55) pour générer le signal SYNC qui déclanche l'étape de resynchronisation, ce signal étant constitué d'une suite périodique d'impulsions dont a période est fonction de l'intervalle de temps ΔT minimum au bout duquel l'écart temporel δt entre les fronts montants des horloges HLS et HA devient supérieur à la période T$_b$ de l'horloge de référence HB;

ces moyens coopérant pour constituer l'horloge locale HLS alternant des phases de fonctionnement autonome et des phase de fonctionnement synchronisé.

**7.** Dispositif selon la revendication 6, **caractérisé en ce qu'**il comporte une entrée de commande de synchronisation initiale (SI), permettant de déterminer l'horloge HL$_i$ synchrone de l'horloge HA et de sélectionner cette l'horloge.

**8.** Dispositif selon l'une des revendications 6 ou 7, **caractérisé en ce que**, l'horloge sélectionnée étant l'horloge HL$_n$, la commande Avance /Retard (A/R) synthétisée est une commande booléenne dont un état commande la sélection de L'horloge H$_{n-1}$ pour la sélection suivante, tandis que l'autre état commande la sélection de l'horloge H$_{n+1}$

**9.** Dispositif selon l'une quelconque des revendications 6 à 8, **caractérisé en ce que** l'horloge de référence HB est l'horloge qui cadence les données émises par l'équipement comportant le dispositif.

**10.** Système de transmission bidirectionnel de données synchrones comportant au moins deux équipements A et B, **caractérisé en ce que** chacun des équipements comporte un dispositif selon l'une des revendications 6 à 9.

**Claims**

**1.** Method of sampling, by means of a local clock HLS, data sequenced by a clock HA and transmitted with the clock HA from an item of equipment A to an item of equipment B while keeping binary integrity, comprising at least two phases repeated alternately:

- a phase (41) of free operation during which the item of equipment B samples the data by means of the local clock HLS, this clock operating in an autonomous manner,
- a phase (42) of synchronizing the local clock HLS with the clock HA;

during which the local clock HLS, while sampling the data transmitted, is synchronized with the clock HA which sequences the data; this synchronization being carried out, without producing any discontinuity in the local clock HLS, by determining whether the rising edge of the local clock HLS is in advance or is delayed with respect to that of the clock HA and;

- by shortening the duration of the local clock HLS during a clock cycle if the rising edge of the local clock HLS is delayed with respect to that of the clock HA,
- by lengthening the duration of the local clock HLS during a clock cycle if the local clock HLS is in advance with respect to the clock HA,

so that the clocks HLS and HA are synchronous at the next cycle;
the frequency of execution of the synchronization step being defined in such a way as to guarantee that, having regard to the accuracies of the clocks HA and HLS, the gap between the rising edges of the two clocks is not greater than half a period of the clock HA.

2. Method according to Claim 1, **characterized in that**, during the synchronization phase, the lengthening or shortening of the duration of the local clock HLS is carried out by lengthening (44) or shortening (45) the duration of the clock pulse.

3. Method according to one of Claims 1 or 2, **characterized in that** the switch from the free operating phase (41) to the synchronization phase (42) is performed on the appearance of a synchronization signal, SYNC, consisting of periodic pulses (31, 43).

4. Method according to Claim 3, **characterized in that** the period of the synchronization signal (31, 43) is such that between two resynchronization phases and for a chosen value N, the time interval between the rising edges of the clocks HLS and HA does not become greater than a value equal to an Nth of the period of the clock HA.

5. Method according to any one of Claims 1 to 4, **characterized in that**, during the synchronization phase (42), the advance or delay of the rising edge of the local clock HLS with respect to the rising edge of the clock HA is determined by measuring the time interval $\Delta t$ separating these two rising edges.

6. Device comprising means suitable for implementing the steps of the sampling method according to Claim 4, **characterized in that** it comprises at least

- means (52) for synthesizing on the basis of a reference clock HB, N clocks $HL_i$ of frequency equal to the frequency of HB, of accuracy substantially equal to the accuracy of the reference clock HB, each clock of rank n exhibiting a rising edge offset by a time interval $\Delta t$, respectively in advance or delayed with respect to the clocks of rank n-1 or n+1,
- means (53) for delivering the local clock HLS, this clock being obtained by selecting, at each synchronization step, one clock $HL_n$ from among the N synthesized clocks $HL_i$, so that the local clock HLS remains equal to the clock $HL_n$ up to the next synchronization step, and that it then becomes equal to $HL_{n+1}$ or $HL_{n-1}$ depending on the value of the command applied to said means.
- means (54) for synthesizing an Advance/Delay command applied to the means (53) delivering the sampling clock HLS, the value of this command making it possible to determine at each synchronization step, on the basis of the clock $HL_n$ selected in the previous synchronization step, the clock $HL_{n-1}$ or $HL_{n+1}$ intended to constitute the local clock HLS up to the next synchronization step; the value of this command being dependent on the result of the analysis of the time gap $\Delta t$ existing between the rising edge of the local clock HLS and that of the clock HA,
- means (55) for generating the signal SYNC which triggers the resynchronization step, this signal consisting of a periodic string of pulses, a period of which is dependent on the minimum time interval $\Delta t$ after which the time gap $\Delta t$ between the rising edges of the clocks HLS and HA becomes greater than the period $T_b$ of the reference clock HB;

these means cooperating so as to constitute the local clock HLS alternating with the phases of autonomous operation and with the phase of synchronized operation.

7. Device according to Claim 6, **characterized in that** it comprises an initial synchronization command input (SI), making it possible to determine the clock $HL_i$ synchronous with the clock HA and to select this clock.

8. Device according to one of Claims 6 or 7, **characterized in that**, the clock selected being the clock $HL_n$, the synthesized Advance/Delay (A/D) command is a Boolean command, one state of which controls the selection of the clock $H_{n-1}$ for the next selection, while the other state controls the selection of the clock $H_{n+1}$.

9. Device according to any one of Claims 6 to 8, **characterized in that** the reference clock HB is the clock which sets the rate for the data sent by the item of equipment comprising the device.

10. System for bidirectional transmission of synchronous data comprising at least two items of equipment A and B, **characterized in that** each of the items of equipment comprises a device according to one of Claims 6 to 9.


**Patentansprüche**

1. Verfahren zum Abtasten mittels eines lokalen Taktgebersignals HLS von Daten, die durch ein Taktgebersignal HA sequenziert und mit dem Taktgebersignal HA von einer Ausstattung A zu einer Ausstattung B unter Beibehalten der binären Integrität gesendet werden, das mindestens zwei abwechselnd wiederholte Phasen aufweist:

   - eine Phase (41) freien Betriebs, während welcher die Ausstattung B die Daten mit Hilfe des lokalen Taktgebersignals HLS abtastet, wobei dieses Taktgebersignal autonom funktioniert,
   - eine Phase (42) des Synchronisierens des lokalen Taktgebersignals HLS mit dem Taktgebersignal HA,

   während welcher das lokale Taktgebersignal HLS unter Abtasten der übertragenen Daten mit dem Taktgebersignal HA, das die Daten sequenziert, synchronisiert wird, wobei diese Synchronisation ausgeführt wird, ohne eine Unterbrechung auf dem lokalen Taktgebersignal HLS zu erzeugen und unter Bestimmen, ob die ansteigende Flanke des lokalen Taktgebersignals HLS im Vergleich zu der des Taktgebersignals HA vorläuft oder verzögert ist, und:

   - unter Verkürzen der Dauer des lokalen Taktgebersignals HLS während eines Taktgeberzyklus, wenn die ansteigende Flanke des lokalen Taktgebersignals HLS im Vergleich zu dem Taktgebersignal HA verzögert ist,
   - unter Verlängern der Dauer des lokalen Taktgebersignals HLS während eines Taktgeberzyklus, wenn das lokale Taktgebersignal HLS im Vergleich zu dem Taktgebersignal HA vorläuft,

   so dass die Taktgebersignale HLS und HA beim nächsten Zyklus synchron sind, wobei die Ausführungsfrequenz des Synchronisationsschritts so definiert ist, dass unter Berücksichtigung der Präzisionen der Taktgebersignale HA und HLS garantiert ist, dass der Unterschied zwischen den ansteigenden Flanken der zwei Taktgebersignale nicht größer ist als eine halbe Periode des Taktgebersignals HA.

2. Verfahren nach Anspruch 1, **dadurch gekennzeichnet, dass** bei der Synchronisationsphase das Verlängern oder das Kürzen der Dauer des lokalen Taktgebersignals HLS durch Verlängern (44) oder Verkürzen (45) der Taktgeberimpulsdauer ausgeführt wird.

3. Verfahren nach einem der Ansprüche 1 oder 2, **dadurch gekennzeichnet, dass** der Übergang von der Phase (41) des freien Betriebs auf die Phase (42) der Synchronisation beim Auftreten eines Synchronisationssignals SYNC, das aus periodischen Impulsen (31, 43) besteht, ausgeführt wird.

4. Verfahren nach Anspruch 3, **dadurch gekennzeichnet, dass** die Periode des Synchronisationssignals (31, 43) derart ist, dass zwischen zwei Neusynchronisationsphasen und für einen ausgewählten Wert N das Zeitintervall zwischen den ansteigenden Flanken der Taktgebersignale HLS und HA nicht größer wird als ein Wert gleich dem N. der Periode des Taktgebersignals HA.

5. Verfahren nach einem der Ansprüche 1 bis 4, **dadurch gekennzeichnet, dass** der Vorlauf oder die Verzögerung der ansteigenden Flanke des lokalen Taktgebersignals HLS gegenüber der ansteigenden Flanke des Taktgebersignals HA während der Synchronisationsphase (42) bestimmt wird, indem das Zeitintervall $\delta t$ gemessen wird, das diese zwei ansteigenden Flanken trennt.

6. Vorrichtung, die Mittel aufweist, um die Schritte des Abtastverfahrens nach Anspruch 4 umzusetzen, **dadurch gekennzeichnet, dass** sie mindestens Folgendes aufweist:

   - Mittel (52) zum Synthetisieren ausgehend von einem Referenztaktgebersignal HB von N Taktgebersignalen $HL_i$ mit einer Frequenz, die gleich der Frequenz von HB ist, mit im Wesentlichen gleicher Präzision wie die Präzision des Referenztaktgebersignals HB,

   wobei jedes Taktgebersignal mit Rang n eine ansteigende Flanke aufweist, die jeweils im Vorlauf oder in Verzögerung im Vergleich zu den Taktgebersignalen mit Rang n-1 oder n+1 um ein Zeitintervall $\Delta t$ versetzt ist,

   - Mittel (53) zum Liefern des lokalen Taktgebersignals HLS, wobei dieses Taktgebersignal durch Auswahl in jedem Synchronisationsschritt eines Taktgebersignals $HL_n$ aus den N synthetisierten Taktgebersignalen $HL_i$ erzielt wird, so dass das lokale Taktgebersignal HLS bis zu dem nächsten Synchronisationsschritt gleich dem Taktgebersignal $HL_n$ bleibt und dann je nach dem an die Mittel angelegten Steuerwert wieder gleich dem Taktgebersignal $HL_{n+1}$ oder $HL_{n-1}$ wird,

- Mittel (54) zum Synthetisieren eines Vorlauf/ Verzögerungsbefehls, der an die Mittel (53) angelegt wird, die das Abtasttaktgebersignal HLS liefern, wobei der Wert dieses Befehls es erlaubt, in jedem Synchronisationsschritt ausgehend von dem im vorhergehenden Synchronisationsschritt ausgewählten Taktgebersignal $HL_n$ das Taktgebersignal $HL_{n-1}$ oder $HL_{n+1}$ zu bestimmen, das dazu bestimmt ist, das lokale Taktgebersignal HLS bis zu dem nächsten Synchronisationsschritt zu bilden, wobei der Wert dieses Befehls von dem Ergebnis der Analyse des zeitlichen Unterschieds $\delta t$ abhängt, der zwischen der ansteigenden Flanke des lokalen Taktgebersignals HLS und der des Taktgebersignals HA besteht,

- Mittel (55) zum Erzeugen des Signals SYNC, das den Neusynchronisationsschritt auslöst, wobei dieses Signal aus einer periodischen Abfolge von Impulsen besteht, deren Periode von dem Mindestzeitintervall $\Delta T$ abhängt, an dessen Ende der zeitliche Unterschied $\delta t$ zwischen den ansteigenden Flanken der Taktgebersignale HLS und HA größer wird als die Periode $T_b$ des Referenztaktgebersignals HB,

wobei diese Mittel zusammenwirken, um das lokale Taktgebersignal HLS zu bilden, das autonome Betriebsphasen und synchronisierte Betriebsphasen abwechselt.

**7.** Vorrichtung nach Anspruch 6, **dadurch gekennzeichnet, dass** sie einen Steuereingang für ursprüngliche Synchronisation (SI) aufweist, der es erlaubt, das Taktgebersignal $HL_i$ zu bestimmen, das mit dem Taktgebersignal HA synchron ist, und dieses Taktgebersignal auszuwählen.

**8.** Vorrichtung nach einem der Ansprüche 6 oder 7, **dadurch gekennzeichnet, dass** das ausgewählte Taktgebersignal das Taktgebersignal $HL_n$ ist, dass der synthetisierte Vorlauf-/Verzögerungsbefehl (A/R) ein boolescher Befehl ist, von dem ein Zustand die Auswahl des Taktgebersignals $H_{n-1}$ für die nächste Auswahl steuert, während der andere Zustand die Auswahl des Taktgebersignals $H_{n+1}$ steuert.

**9.** Vorrichtung nach einem der Ansprüche 6 bis 8, **dadurch gekennzeichnet, dass** das Referenztaktgebersignal HB das Taktgebersignal ist, das die Daten taktet, die von der Ausstattung, die die Vorrichtung aufweist, gesendet werden.

**10.** Bidirektionales Übertragungssystem für synchrone Daten, das mindestens zwei Ausstattungen A und B aufweist, **dadurch gekennzeichnet, dass** jede der Ausstattungen eine Vorrichtung gemäß einem der Ansprüche 6 bis 9 aufweist.

Fig. 1

EQUIPEMENT A

Terminal A

Codage

Décodage

TX
RX

HA
DA
DB
HB

THA
TXA
TXB
THB

RX
TX

DA
DB
HB

Décodage

Codage

Terminal B

EQUIPEMENT B

HL

DA'

14  13  11  13  14

12  12

EP 1 571 531 B1

12

Fig. 2

EP 1 571 531 B1

HA

DA | D₁ | D₂ | D₃ | D₄ | D₅ | D₆ | D₇ | D₈ | D₉ | D₁₀ | D₁₁ | D₁₂ | D₁₃ | D₁₄ | D₁₅ | D₁₆ | D₁₇

SYNC

HLS

DA' | D₁ | D₂ | D₃ | D₄ | D₅ | D₆ | D₇ | D₈ | D₉ | D₁₀ | D₁₁ | D₁₂ | D₁₃ | D₁₄ | D₁₅ | D₁₆

31  32  33

$\Delta t$

Fig. 3

Fig. 4a

Fig. 4b

Fig. 5

**EP 1 571 531 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1075107 A